# EUROPEAN PATENT SPECIFICATION

(11) **EP 1 584 779 B1**
(45) Date of publication and mention of the grant of the patent: **12.05.2010**
(21) Application number: 05007371.7
(22) Date of filing: 05.04.2005
(51) Int. Cl.: E05F 5/02, E05F 5/10, E05F 5/08

(54) **Shock absorber for moving parts in a piece of furniture**
Dämpfer für bewegliche Möbelelemente
Amortisseur pour éléments mobiles de meuble

(30) Priority: 08.04.2004 IT MI20040154 U
(43) Date of publication of application: 12.10.2005
(73) Proprietor: Agostino Ferrari S.p.A., 24122 Bergamo (IT)
(72) Inventor: Migli, Carlo, 23900 Lecco LC (IT)
(74) Representative: Faraggiana, Vittorio

(56) References cited:
- EP-A- 1 348 828
- WO-A-96/32868
- US-A- 4 110 868

## Description

The present invention relates to a shock absorber designed to brake the movement of moving parts in a piece of furniture (such as doors of containers, frontal portions of drawers, or door wings of various types), in order to avoid strong shocks that could damage the furniture.

In the most recent years in the furniture field use of shock absorbers has become widespread to brake the too sudden closing movements of the striking elements in a piece of furniture. A too quick closure of a drawer or a wing in fact could cause a very strong end-of-stroke impact, which will damage the furniture sometimes in an irreparable manner.

These shock absorbers must be able to generate a braking action that is dependent on the closing speed of the furniture drawer or door. It is in fact desirable that closure of the striking elements, if carried out at low speed, should not be hindered or braked in a remarkable manner by the shock absorber action. On the other hand, the braking effect generated by the same shock absorber must be very strong when the closing speed of the striking elements of the furniture is so high that dangerous end-of-stroke impacts can be caused.

In the past use has been proposed of shock absorbers of the hydraulic type already well-known since long in different technical fields. To carry out the braking action, the hydraulic shock absorbers utilize the reticence of a viscous fluid to pass from a first chamber compressed by a damping piston to a second chamber collecting the low-pressure fluid.

These shock absorbers however have some important disadvantages. For assembly of said shock absorbers, a high number of pieces (typically nine to twelve pieces) is required, among which it is also to mention suitable sealing elements to retain the viscous fluid in the chambers. In addition, assembling of the shock absorber is rather difficult and expensive, as it also involves filling of the chambers with the viscous liquid. Furthermore, the pieces used in the assembly must be manufactured in a very precise manner to ensure a suitable intensity to the braking action generated by the shock absorber. This solution in addition to being expensive, also imposes disposal of the viscous liquid, typically of a polluting nature.

To obviate the above drawbacks, dry shock absorbers have been developed which, to slow down the stroke of the striking element, utilize friction generated between the inner wall of a cylindrical chamber and a piston axially slidable inside said chamber. One portion of said piston is formed of an elastic element received within the chamber with some clearance. When the piston is violently pushed as a result of a shock (in the case of a drawer, for example) the elastic portion of same is axially compressed due to a pneumatic effect counteracting sliding of the piston in the chamber. The axial compression imposes a radial expansion to the elastic portion until the latter comes into contact with the inner wall of the chamber. Under this situation a frictional force is developed that imposes a braking to the piston stroke (and therefore to the wing element of the piece of furniture to be braked).

However, while this solution enables problems typical of hydraulic shock absorbers to be avoided, it does not ensure a constant operative feature over the whole duration of the useful life of the shock absorber (that typically should be of a great number of years). In fact the elastic portion of the piston is submitted, on the one hand, to repeated axial compressive stresses and, on the other hand, to surface abrasions due to the braking friction. This dual stress can bring to a relatively quick wear of the material that loses its original features and therefore can no longer ensure normal and correct operation of the shock absorber.

It is a general aim of the present invention to obviate the above mentioned drawbacks by providing a shock absorber for moving parts in a piece of furniture that has a simple and cheap structure and a satisfactorily constant-in-time operation feature.

EP 1 348 828 A is considered to be the closest prior art to the subject-matter of claim 1 and discloses all the features of the preamble.

In view of the above aim, in accordance with the invention, a shock absorber suitable for being between two moving parts in a piece of furniture has been conceived, which comprises an elongated holding body provided with an axial cavity, at the inside of which a piston element and a rod slide, the holding body and rod acting on one of the two moving parts of the piece of furniture respectively, a first spring being present between the rod and piston element and a second spring being present between the piston element and a bottom of the holding body, the piston element having a circumferential portion of friction with the inner wall of the holding body, the portion of the piston element close to the friction portion forming a wedging seat provided with longitudinal discontinuities to enable elastic expansion when the seat receives a wedge end of the rod in wedge engagement.

For better explaining the principles of the present invention and the advantages it offers over the known art, a possible embodiment applying said principles will be described hereinafter, with the aid of the accompanying drawings. In the drawings:
- Fig. 1 is a sectional side view of a shock absorber in accordance with the present invention;
- Fig. 2 is a view of the shock absorber seen in Fig. 1 in a braking step;
- Fig. 3a is a front view of a piston element of the shock absorber in Fig. 1,
- Fig. 3b is a section view of the element in Fig. 3a;
- Fig. 4 is a view of one component element of the shock absorber shown in Fig. 1.

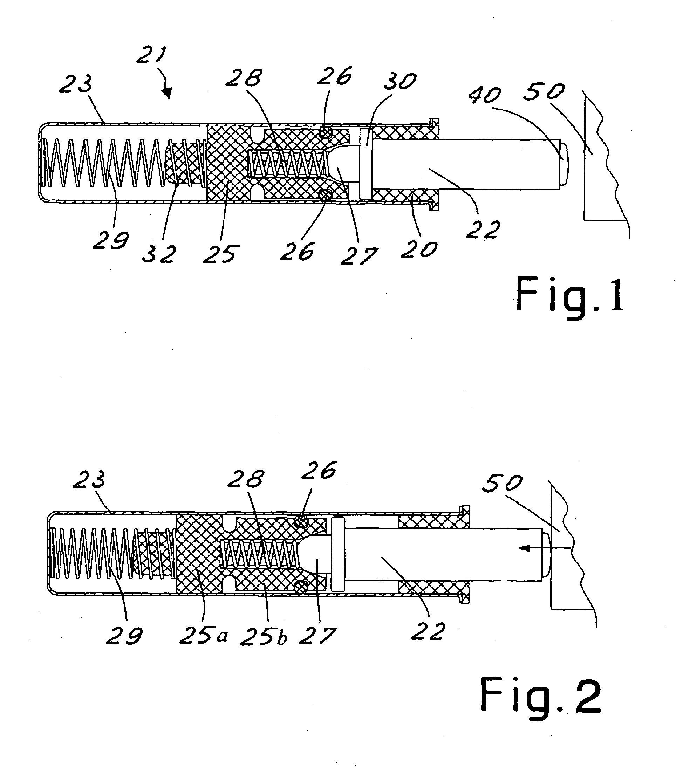

With reference to the drawings, shown in Fig. 1 is a shock absorber 21 designed to brake the too sudden closing movements of a moving part 50 of a piece of furniture. The moving part 50 (partly shown in Fig. 1) could be the frontal portion of a drawer or a door of a container, for example.

The shock absorber 21 comprises an elongated holding body 23 provided with an axial cavity at the inside of which a rod 22 designed to come into contact with the moving part 50 in a closing step thereof, can slide. The cavity of the holding body 23 and the rod 22 advantageously have an axial symmetry and could be of circular cylindrical shape, for example.

The rod 22 slides with a small clearance in a hole of a plug 20 closing the holding body 23 at an open end thereof. Abutment of a flange 30 against the inner edge of the plug 20 restrains the rod stroke towards the outside of body 23. It is to be noted that the rod 22 is provided with a rubber bumper 40 at its contact end with the moving element 50; inside body 23, on the contrary, the rod is provided with a wedge end 27 having the form of a spherical cap.

A piston element 25 is present between the spherical cap 27 and the bottom of the hollow body 23. This element 25 slides within body 23 with a small play and comprises a circumferential portion 26 designed to be pressed against the inner wall of the hollow body to generate a braking friction force in accordance with modalities to be described in the following.

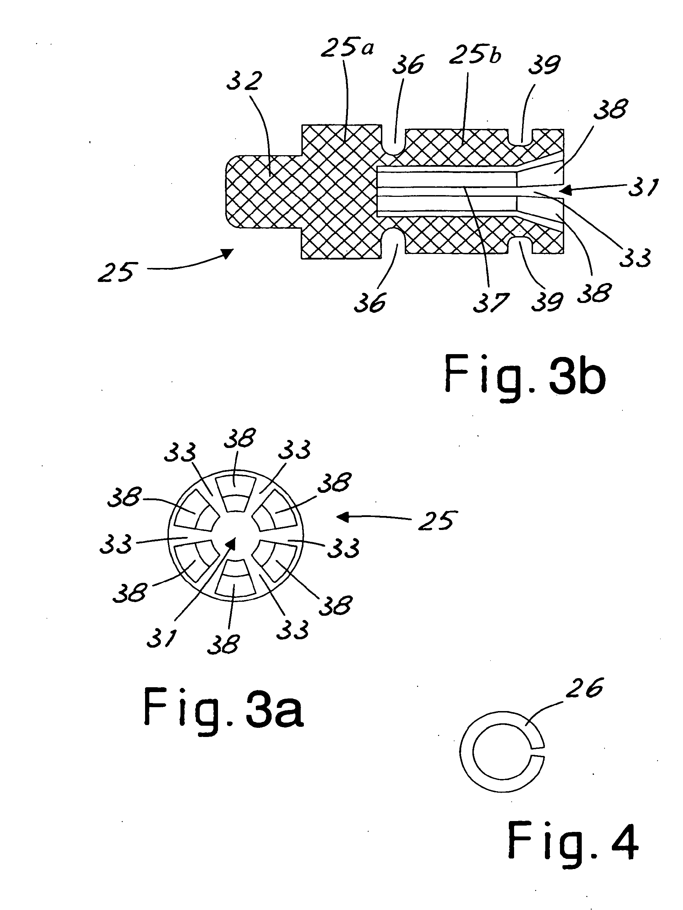

The piston element 25 (as best shown in Figs. 3a and 3b) comprises a rear portion 25a that is received with minimum play in body 23 and a front portion 25b which is internally hollow and is provided with a plurality of longitudinal cuts (or slits) 33.

The front portion 25b forms a wedging seat 31 adapted to receive the spherical cap 27 to carry out a wedge engagement when the rod 22 is violently bumped. The wedging seat 31 could be shaped like a frustum of cone for example, as shown in the figures.

The innermost part of the front portion 25b on the contrary, forms a cylindrical recess 37 inside which a spring 28 acting between the spherical cap 27 and piston 25, is received.

The side walls of the wedging seat 31 and of the cylindrical recess 37 are defined by a plurality of cylindrical sectors 38 separated by a corresponding plurality of longitudinal cuts 33 (see Figs. 3a and 3b). According to a preferred embodiment of the shock absorber, the cylindrical sectors are six in number and are such sized that they can easily elastically bend towards the outside of the piston; this expedient allows an easy radial expansion of the wedging seat 31 in case of wedge engagement of the spherical cap 27 in the seat 31. To note the presence of an annular cut 36 between the front portion 25b and the rear portion 25a of piston 25 which annular cut 36 is designed to further promote bending to the outside of the cylindrical sectors 38.

At the height of the wedging seat 31, the front portion 25b of the piston element is provided with an annular seat 39 formed in the outer side surface of the cylindrical sectors 38. The annular seat 39 is designed to receive a circlip 26, made of rubber for example.

The ring 26 embodies the friction portion of the piston element 25 and is such sized that it can slide within the holding body 23 with minimum friction when the elastic clamp formed by the wedging seat 31 is not submitted to expansion stresses.

According to an embodiment of the shock absorber, the circlip 26 is of toric shape and open at a point as shown in Fig. 4.

Axially projecting from the rear portion 25a of the piston element 25 is a cylindrical protuberance 32 forming the end-of-stroke abutment of the piston against the bottom of the holding body 23.

The protuberance 32 also has the function of a guide for spring 29 mounted between the bottom of the hollow body 23 and piston 25. This spring 29 pushes the rod 22 and piston element 25 to their end position stretched out to the outside of the holding body 23 (see Fig. 1).

When at rest, the spherical cap 27 of rod 22 is not in contact with the frustum of cone of the wedging seat 31 but is maintained slightly spaced apart therefrom by interposition of spring 28 between the piston and rod (see Fig. 1). It is to be noted that the stiffness of spring 28 between the rod and friction element is higher than that of spring 29.

When the moving part 50 of the piece of furniture comes into contact with the rubber bumper 40 without suddenly moving rod 22, piston 25 slides almost in an integral manner with rod 22, and moves therewith towards the bottom of the hollow body 23. Under the thrust of a smooth closure of the moving part 50, neither friction between the circlip 26 and inner wall of body 23, nor the elastic force of spring 29 or other forces counteracting sliding of piston 25 can induce the spring 28 to greatly compress. In this manner, the spherical cap 27 does not get wedged into the seat 31 formed in piston 25, so that the rod 22 can slide slowly without encountering hindrances until the end of its stroke, for a correct closure of the furniture drawer or door.

When, on the contrary, closure of the moving element 50 is too sudden and violent, the rod 22 is accelerated at high speed towards the bottom of the hollow body 23. In this instance acceleration of piston 25 takes place more slowly than rod 22 (that is in direct contact with the moving part 50). This starting acceleration difference between piston and rod can be due to the inertia of the piston mass or also to the starting static friction between the piston and holding body, for example.

This different response of piston 25 in case of sudden stress leads spring 28 to compress, thus enabling wedging of cap 27 into the seat 31 (see Fig. 2). The wedge-engagement induces an outwards radial bending of the cylindrical sectors 38 and, as a result, leads the circlip 26 to be pressed, first with little force, against the inner wall of the holding body 23. This involves an increase in friction between the piston 25 and inner wall of body 23, causing more resistance to sliding of piston 25. This increased resistance causes a deeper wedging of the spherical cap 27 into the conical seat 31, so that friction between the circlip 26 and wall of body 23 increases still more. Actually, a self-fed amplification of the braking effect is created that enables a strong resistance to sliding of rod 22 to be developed, which resistance is able to damp a too quick closing movement of the moving part 50 of the piece of furniture.

It is to be noted that the clearance between the outer surface of the cylindrical sectors 38 and the inner wall of the holding body 23 must be of such a nature as to avoid leakage through the circlip (or O-ring) 26 between said wall and the cylindrical sector. In particular, said clearance must be minimum at the portion of the cylindrical sectors 38 included between the circlip 26 and rod 22. In fact, in case of violent shock against the rod, the ring would tend to be clamped between the inner wall of body 23 and the cylindrical sectors 38, should said clearance be sufficiently wide (as wide as the radius of the cross section of the toric ring, for example). Should this occur, the braking action of the shock absorber would be too much enhanced by the wedging action, which could create damages to the furniture and the shock absorber.

It has been also surprisingly found that if the circlip 26 is received, at rest, with a minimum radial clearance into the holding body 23, this ring can generate a friction with the inner wall of the body 23 depending on the sliding speed. In particular, the ring (either if it is closed or, better, open with a split) will act with an increasing friction as the sliding speed increases, apart from the outwards radial thrust due to the previously described wedging. This behaviour of the O-ring could be utilized to facilitate compression of spring 28 should the rod 22 be accelerated at high speed due to a violent shock, and to "trigger" wedging of the spherical cap 27 into the wedging seat 31 and amplification of the braking effect of the shock absorber.

At this point it is apparent that the previously stated aims of the present invention are achieved. In particular a shock absorber for furniture has been conceived that is characterized by a simple and cheap structure, capable of attenuating the violent shocks due to a too quick closure of striking elements in a piece of furniture.

The shock-absorber in accordance with the preferred embodiments has been in fact obtained using a dry system; therefore the sealing elements that were present in the shock-absorbers of the hydraulic type can be eliminated. In this manner the number of components can be reduced and the assembling process of the final product can be substantially simplified as compared with assembling in fluid-operated shock-absorbers.

In addition, the shock-absorber in accordance with the invention has a constant operation feature in time, ensuring a satisfactory attenuation of the shocks for a long period of useful life of the shock-absorber. Should the rubber ring get partly worn in time, the shock-absorber would go on generating a strong braking action (if necessary); in fact, the elastic expansion of the wedging seat and the resulting self-fed amplification of the braking effect in any case enable a strong damping action to be developed so that a satisfactory constancy of the operation feature of the shock-absorber is ensured.

Obviously, the above description of an embodiment applying the innovative principles of the present invention is given by way of example only and therefore must not be considered as a limitation of the patent rights herein claimed.

The wedging seat could be shaped in various manners, and not necessarily have the shape of a frustum of cone; it could have a curved surface with a varying inclination with respect to the shock-absorber axis; in particular, the seat could have a surface with a small-angle inclination relative to the shock absorber axis at a portion thereof closer to the rod, while it could have a surface inclined by a larger angle at a portion thereof farther from the rod. This expedient enables the wedging effect to be attenuated when wedging of the rod has already occurred over a certain stretch, so that a too great radial expansion of the seat is avoided, which could enhance the braking action of the shock-absorber too much.

The wedge end of the rod too could have different shapes and not necessarily that of a spherical cap.

The friction portion of the piston element could also be made of one piece construction on the outer side surface of said piston element. In this case, the friction portion could consist of a circumferential rib formed at the height of the wedging seat of the piston element.

## Claims

1. A shock absorber suitable for being between moving parts in a piece of furniture comprising an elongated holding body (23) provided with an axial cavity, at the inside of which a piston element (25) and a rod (22) slide, the holding body and rod acting on one of the two moving parts of the piece of furniture respectively, a first spring (28) being present between the rod and piston element and a second spring (29) being present between the piston element (25) and a bottom of the holding body (23), the piston element (25) having a circumferential portion (26) of friction with the inner wall of the holding body (23), **characterised in that** the portion of the piston element (25) close to the friction portion (26) forms a wedging seat (31) provided with longitudinal discontinuities (33) to enable elastic expansion when the seat (31) receives a wedge end (27) of the rod (22) in a wedge engagement.

2. A shock-absorber as claimed in claim 1, **characterized in that** the axial cavity of the holding body (23) is of circular cylindrical shape.

3. A shock-absorber as claimed in claim 2, **characterized in that** said wedging seat (31) of the piston element (25) is defined by projections (38) approximately having the shape of cylindrical sectors separated by longitudinal slits (33).

4. A shock-absorber as claimed in claim 3, **characterized in that** the friction portion comprises a circlip (26) mounted in an annular groove (39) in the outer side surface of the cylindrical sectors (38).

5. A shock-absorber as claimed in claim 4, **characterized in that** said circlip (26) is of toric shape and is made of rubber.

6. A shock-absorber as claimed in claim 4, **characterized in that** said circlip (26) is open at least at one point.

7. A shock-absorber as claimed in claim 1, **characterized in that** said friction portion (26) is formed of one piece construction on the outer side surface of the piston element (25).

8. A shock-absorber as claimed in claim 1, **characterized in that** said first spring (28) between the rod (22) and piston element (25) is received in a recess (37) formed in the body of the piston element (25).

9. A shock-absorber as claimed in claim 1, **characterized in that** the wedge end (27) has a hemispherical shape.

10. A shock-absorber as claimed in claim 1, **characterized in that** said wedging seat (31) has a frustoconical shape.

## Patentansprüche

1. Dämpfer, der geeignet ist, zwischen beweglichen Teilen in einem Möbel angebracht zu sein, bestehend aus einem länglichen Haltekörper (23), der einen Axialhohlraum aufweist, an dessen Innenseite ein Kolbenelement (25) und eine Stange (22) gleiten, wobei der Haltekörper und die Stange jeweils auf einen der beiden beweglichen Teile des Möbels wirken und wobei sich zwischen der Stange und dem Kolbenelement eine erste Feder (28) befindet und sich zwischen dem Kolbenelement (25) und einem Boden des Haltekörpers (23) eine zweite Feder (29) befindet und wobei das Kolbenelement (25) einen peripheren Reibungsabschnitt (26) mit der Innenwandung des Haltekörpers (23) aufweist,
**dadurch gekennzeichnet, dass** der dem Reibungsabschnitt (26) benachbarte Abschnitt des Kolbenelements (25) einen Keilsitz (31) bildet, der mit längslaufenden Unterbrechungen (33) ausgestattet ist, um eine elastische Aufweitung zu ermöglichen, wenn der Sitz (31) ein Keilende (27) der Stange (22) in Keileingriff nimmt.

2. Dämpfer nach Anspruch 1,
**dadurch gekennzeichnet, dass** der Axialhohlraum des Haltekörpers (23) kreiszylindrisch geformt ist.

3. Dämpfer nach Anspruch 2,
**dadurch gekennzeichnet, dass** der Keilsitz (31) des Kolbenelements (25) durch Vorsprünge (38) definiert ist, die annähernd die Form von durch Längsschlitze (33) getrennten Zylindersektoren aufweisen.

4. Dämpfer nach Anspruch 3,
**dadurch gekennzeichnet, dass** der Reibungsabschnitt einen Sicherungsring (26) umfasst, der in einer Ringnut (39) in der äußeren Seitenfläche der Zylindersektoren (38) angeordnet ist.

5. Dämpfer nach Anspruch 4,
**dadurch gekennzeichnet, dass** der Sicherungsring (26) wulstförmig ist und aus Gummi besteht.

6. Dämpfer nach Anspruch 4,
**dadurch gekennzeichnet, dass** der Sicherungsring (26) an mindestens einer Stelle offen ist.

7. Dämpfer nach Anspruch 1,
**dadurch gekennzeichnet, dass** der Reibungsabschnitt (26) einstückig an der äußeren Seitenfläche des Kolbenelements (25) ausgebildet ist.

8. Dämpfer nach Anspruch 1,
**dadurch gekennzeichnet, dass** die erste Feder (28) zwischen der Stange (22) und dem Kolbenelement (25) in einer im Körper des Kolbenelements (25) gebildeten Ausnehmung (37) aufgenommen ist.

9. Dämpfer nach Anspruch 1,
**dadurch gekennzeichnet, dass** das Keilende (27) halbkugelförmig ausgebildet ist.

10. Dämpfer nach Anspruch 1,
**dadurch gekennzeichnet, dass** der Keilsitz (31) kegelstumpfförmig ausgebildet ist.

## Revendications

1. Absorbeur de chocs approprié pour être entre des parties mobiles d'un meuble comprenant un corps de support allongé (23) muni d'une cavité axiale à l'intérieur de laquelle coulisse un élément de piston (25) et une tige (22), le corps de support et la tige agissant sur l'une des deux parties mobiles du meuble respectivement, un premier ressort (28) se trouvant entre la tige et l'élément de piston et un second ressort (29) se trouvant entre l'élément de piston (25) et un fond du corps de support (23), l'élément de piston (25) ayant une portion circonférentielle (26) de friction avec la paroi interne du corps de support (23), **caractérisé en ce que** la portion de l'élément de piston (25) proche de la portion de friction (26) forme un siège de calage (31) muni de discontinuités longitudinales (33) pour permettre une expansion élastique quand le siège (31) reçoit une extrémité de cale (27) de la tige (22) en engagement de calage.

2. Absorbeur de chocs tel que revendiqué dans la revendication 1, **caractérisé en ce que** la cavité axiale du corps de support (23) a une forme circulaire cylindrique.

3. Absorbeur de chocs tel que revendiqué dans la revendication 2, **caractérisé en ce que** ledit siège de calage (31) de l'élément de piston (25) est défini par des projections (38) ayant approximativement la forme de secteurs cylindriques séparés par des fentes longitudinales (33).

4. Absorbeur de chocs tel que revendiqué dans la revendication 3, **caractérisé en ce que** la portion de friction comprend un anneau élastique (26) monté dans une gorge annulaire (39) dans la surface latérale externe des secteurs cylindriques (38).

5. Absorbeur de chocs tel que revendiqué dans la revendication 4, **caractérisé en ce que** ledit anneau élastique (26) est de forme torique et est fabriqué en caoutchouc.

6. Absorbeur de choc tel que revendiqué dans la revendication 4, **caractérisé en ce que** ledit anneau élastique (26) est au moins ouvert à un point.

7. Absorbeur de chocs tel que revendiqué dans la revendication 1, **caractérisé en ce que** ladite portion de friction (26) est formée en une seule pièce sur la surface latérale externe de l'élément de piston (25).

8. Absorbeur de chocs tel que revendiqué dans la revendication 1, **caractérisé en ce que** ledit premier ressort (28) entre la tige (22) et l'élément de piston (25) est reçu dans un évidement (37) formé dans le corps de l'élément de piston (25).

9. Absorbeur de chocs tel que revendiqué dans la revendication 1, **caractérisé en ce que** l'extrémité de calage (27) présente une forme hémisphérique.

10. Absorbeur de chocs tel que revendiqué dans la revendication 1, **caractérisé en ce que** ledit siège de calage (31) a une forme tronconique.
